# EUROPÄISCHE PATENTSCHRIFT

(11) **EP 1 391 647 B1**
(45) Veröffentlichungstag und Bekanntmachung des Hinweises auf die Patenterteilung: **26.10.2005**
(21) Anmeldenummer: 03013664.2
(22) Anmeldetag: 17.06.2003
(51) Int. Cl.: F16K 31/00, F16K 11/044, F15B 13/043

(54) **Mehrwegeventil**
Multiple way valve
Soupape à voies multiples

(30) Priorität: 17.08.2002 DE 20212649 U
(43) Veröffentlichungstag der Anmeldung: 25.02.2004
(73) Patentinhaber: FESTO AG & Co, 73734 Esslingen (DE)
(72) Erfinder: Maichl, Martin, 73084 Salach (DE); Wirtl, Hannes, 86956 Schongau (DE)
(74) Vertreter: Abel, Martin

(56) Entgegenhaltungen:
- EP-A- 1 016 793
- EP-A- 1 158 182
- WO-A-02/41413
- DE-A- 4 410 153
- DE-A- 10 047 705
- DE-A- 19 961 736
- DE-B- 1 226 843
- DE-T- 69 124 157
- FR-A- 2 597 630

## Beschreibung

Die Erfindung betrifft ein Mehrwegeventil, mit einer Ventilkammer, in die wenigstens drei Ventilkanäle einmünden, wobei zwei der Kanalmündungen auf entgegengesetzten Längsseiten eines länglichen, elektrisch aktivierbaren Biegeaktors vorgesehen und jeweils von einem Ventilsitz umrahmt sind.

Ein aus der EP 1158182 A1 bekanntes Mehrwegeventil dieser Art ist als Piezoventil ausgebildet und enthält einen länglichen Piezo-Biegeaktor, der mit zwei schwenkbaren Steuerwippen zusammenarbeitet. In einer Mittelstellung des Piezo-Biegeaktors nehmen die beiden Steuerwippen jeweils eine Schließstellung ein, in der sie an einem Ventilsitz anliegen und die zugeordnete Kanalmündung verschließen. Durch elektrische Aktivierung kann der Piezo-Biegeaktor in die eine oder andere Richtung ausgelenkt werden, sodass er auf die eine oder andere Steuerwippe einwirkt und diese in eine vom betreffenden Ventilsitz abgehobene Stellung verschwenkt. Auf diese Weise kann ein kompakt bauendes 3/3-Wegeventil realisiert werden.

Ein anderes aus der DE 1 226 843 B bekanntes Mehrwegeventil dieser Art ist als Piezoventil ausgebildet und enthält eine Ventilkammer, in die drei Ventilkanäle einmünden, wobei zwei der Kanalmündungen auf entgegensetzten Längsseiten eines länglichen, elektrisch aktivierbaren Biegeaktors vorgesehen sind und jeweils von einem Ventilsitz umrahmt sind.

Dieses Dokument wird als nächstliegender Stand der Technik gesehen und entspricht dem Oberbegriff des Anspruchs 1.

Da das bekannte Mehrwegeventil einen relativ komplizierten Aufbau hat, wird die Aufgabe der vorliegenden Erfindung darin gesehen, ein Mehrwegeventil der eingangs genannten Art zu schaffen, das über einen einfacheren Aufbau verfügt.

Zur Lösung dieser Aufgabe ist vorgesehen, dass die beiden Ventilsitze jeweils an einem federnd in Richtung zum Biegeaktor vorgespannten beweglichen Ventilsitzkörper vorgesehen sind und in einer Mittelstellung des Biegeaktors unter Einnahme einer Schließstellung gleichzeitig am Biegeaktor anliegen, sodass die Kanalmündungen verschlossen sind, wobei der Biegeaktor bei einer ausgehend von der Mittelstellung erfolgenden Auslenkung in die eine oder andere Richtung den in der jeweiligen Auslenkrichtung vorgelagerten Ventilsitzkörper unter Beibehaltung dessen Schließstellung entgegen der Federkraft verdrängen kann und gleichzeitig vom Ventilsitz des anderen, durch Anschlagmittel an einem Nachfolgen gehinderten Ventilsitzkörper abheben und dessen Kanalmündung freigeben kann.

Auf diese Weise befinden sich die beiden vom Biegeaktor zu steuernden Ventilsitze an verstellbaren Ventilsitzkörpern und werden in der Mittelstellung des Biegeaktors durch Federkräfte in einer am Biegeaktor anliegenden Schließstellung gehalten. Wird der Biegeaktor in die eine oder andere Richtung verlagert, hebt er vom Ventilsitz des einen Ventilsitzkörpers ab und gibt somit dessen Kanalmündung frei. Mit dem betreffenden Ventilsitzkörper entgegen der Federkraft kooperierende Anschlagmittel verhindern dabei, dass der federbeaufschlagte Ventilsitzkörper dem Biegeaktor unerwünscht nachfolgt. Zugleich wird durch die Federvorspannung eine Nachgiebigkeit der Ventilsitzkörper gewährleistet, sodass der Biegeaktor den in der jeweiligen Auslenkrichtung vorgelagerten Ventilsitzkörper beim Abheben vom anderen Ventilsitzkörper verdrängen kann, wobei insofern die Schließstellung beibehalten wird. Somit können die beiden vom Biegeaktor gesteuerten Ventilkanäle wahlweise gleichzeitig geschlossen oder, abwechselnd, mit einem in die Ventilkammer einmündenden dritten Ventilkanal verbunden werden. Dies ermöglicht verhältnismäßig einfach die Realisierung eines Dreistellungsventils, insbesondere eines 3/3-Wegeventils, wobei sowohl eine Ausgestaltung als Schaltventil als auch eine Ausgestaltung als Proportionalventil vorgenommen werden kann.

Vorteilhafte Weiterbildungen der Erfindung gehen aus den Unteransprüchen hervor.

Die Ventilsitzkörper könnten beispielsweise am Ventilgehäuse des Mehrwegeventils in der Auslenkrichtung des Biegeaktors verschiebbar gelagert sein. Als besonders vorteilhaft wird jedoch eine Bauform angesehen, bei der sich die Ventilsitzkörper längs des Biegeaktors erstrecken und in der Auslenkebene des Biegeaktors verschwenkbar sind. Die Ventilsitzkörper können dabei in der Mittelstellung des Biegeaktors etwa parallel zu dem Biegeaktor verlaufen. Mit einer solchen Anordnung sind sehr kompakte Abmessungen des Mehrwegeventils verbunden.

Letzteres gilt auch für eine Ausgestaltung, bei der der Biegeaktor einenends gehäusefest eingespannt ist und sich die Schwenkgelenksbereiche der Ventilsitzkörper in der Nähe der Einspannstelle befinden.

Bevorzugt sind die Ventilsitzkörper über ein Festkörpergelenk einstückig mit dem die Ventilkammer definierenden Ventilgehäuse verbunden. Auf diese Weise erübrigt sich die getrennte Ausgestaltung und nachfolgende aufwendige Montage gesonderter Ventilsitzkörper. Eine Herstellung ist beispielsweise durch Spritzgießen sehr kostengünstig möglich.

Als elektrisch aktivierbarer Biegeaktor ist insbesondere ein Piezo-Biegeaktor vorgesehen, insbesondere mit einem Trimorph-Aufbau. Prinzipiell wäre allerdings beispielsweise auch ein aus Formgedächtnismaterial (Memory-Metall) oder aus Bimetall ausgeführter Biegeaktor möglich.

Zum Erhalt der Federvorspannung kann eine federelastische Aufhängung der Ventilsitzkörper am Ventilgehäuse vorgesehen sein. Besonders einfach lässt sich dies bei einer einstückigen Ausgestaltung des Ventilgehäuses und der Ventilsitzkörper realisieren. Möglich ist allerdings auch eine Realisierung der Federkräfte durch gesonderte Federmittel, die einerseits am Ventilgehäuse und andererseits am betreffenden Ventilsitzkörper angreifen. Bevorzugt sitzen die Federmittel in der Ventilkammer.

Wenn die zur Begrenzung des Verstellweges der Ventilsitzkörper vorgesehenen Anschlagmittel in der Richtung der Verstellbewegung des Ventilsitzkörpers justierbar sind, lassen sich die in der Mittelstellung des Biegeaktors eingenommenen Schließstellungen der Ventilsitzkörper sehr präzise justieren, wobei gleichzeitig erreicht wird, dass der die zu öffnende Kanalmündung aufweisende Ventilsitzkörper praktisch überhaupt keine Nachführbewegung ausführt und somit ein relativ großer Öffnungshub des Biegeaktors möglich ist.

Bei einer besonders zweckmäßigen Ausgestaltung sind die Anschlagmittel federnd gegen ein einstellbares Justierelement, beispielsweise eine Justierschraube, vorgespannt. Bei den Anschlagmitteln kann es sich um in die Ventilkammer hineinragende Anschlagarme handeln. Eine besonders feinfühlige Justierung ist möglich, wenn die Anschlagmittel so angeordnet sind, dass sie in der Nachbarschaft des Ventilsitzes mit dem zugeordneten Ventilsitzkörper zusammenwirken.

Nachfolgend wird die Erfindung anhand der beiliegenden Zeichnung näher erläutert. In dieser zeigen:
- Figur 1: im Längsschnitt ein bevorzugtes Ausführungsbeispiel des erfindungsgemäßen Mehrwegeventils, wobei der Biegeaktor eine Mittelstellung einnimmt, und
- Figuren 2 und 3: das Mehrwegeventil aus Figur 1 bei ausgehend von der Mittelstellung in die eine bzw. andere Richtung ausgelenktem Biegeaktor.

Das in seiner Gesamtheit mit Bezugsziffer 1 bezeichnete Mehrwegeventil enthält ein Ventilgehäuse 2 mit einer bevorzugt quaderförmigen Außenkontur. Beim Ausführungsbeispiel besteht das Ventilgehäuse 2 aus Kunststoffmaterial und hat einen mehrteiligen Aufbau. Es verfügt über ein erstes Gehäuseteil 3a und ein zweites Gehäuseteil 3b mit jeweils einem rechteckförmig konturierten Boden 4 und einer von dessen Wand wegragenden umlaufenden Seitenwand 5.

Die beiden Gehäuseteile 3a, 3b sind aneinandergesetzt und unter Abdichtung fest miteinander verbunden. Dabei wird im Innern des Ventilgehäuses 2 eine Ventilkammer 6 definiert.

An einer Einspannstelle 7 zwischen den beiden Seitenwänden 5 ist mit seinem rückseitigen Endabschnitt 8 ein Längserstreckung aufweisender Biegeaktor 12 gehäusefest eingespannt. Ausgehend von der Einspannstelle 7 ragt der Biegeaktor 12 frei endend in die Ventilkammer 6 hinein.

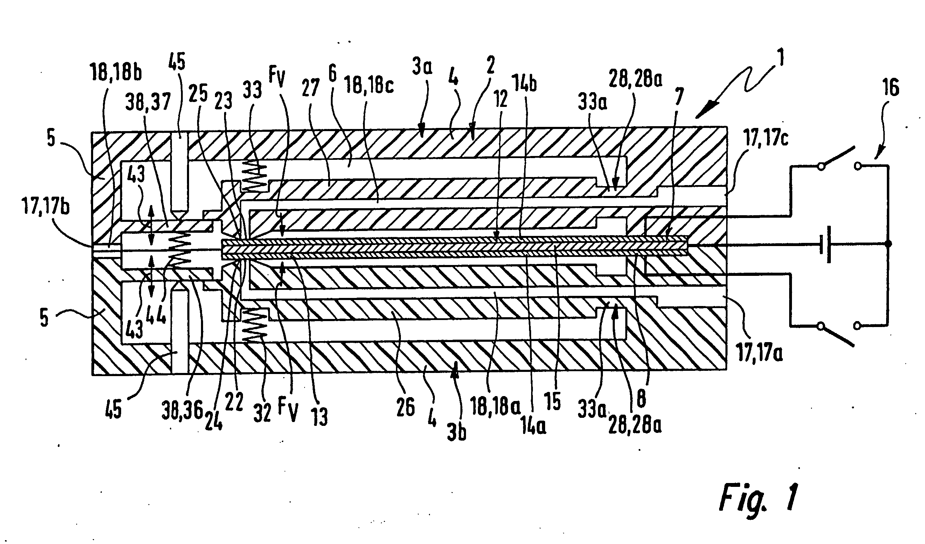

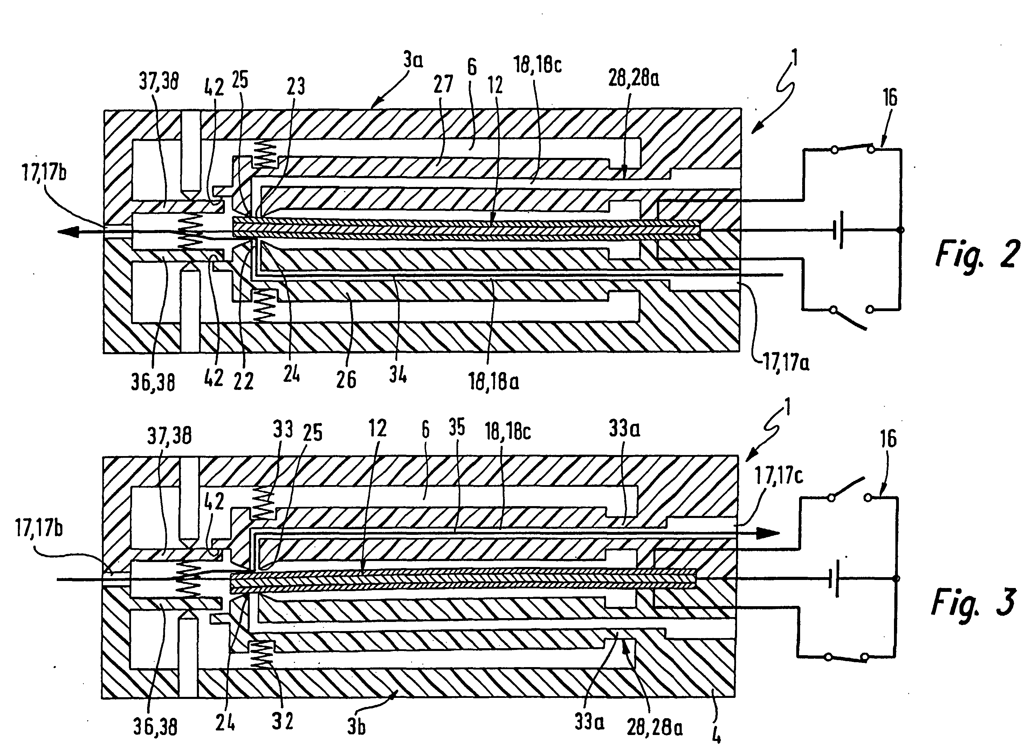

Der Biegeaktor 12 ist elektrisch aktivierbar. In dem aus Figur 1 hervorgehenden Grundzustand hat er eine lineare Erstreckung. Entsprechend der erfolgten Aktivierung kann der Biegeaktor 12 in einer zur Zeichenebene parallelen Auslenkebene in die eine oder andere Richtung ausgelenkt werden. Dabei biegt er sich geringfügig durch. Die Figuren 2 und 3 zeigen den Biegeaktor 12 in der in Richtung zum ersten Gehäuseteil 3a (Figur 2) und in der in Richtung zum zweiten Gehäuseteil 3b (Figur 3) ausgelenkten Stellung.

Der Biegeaktor 12 ist bevorzugt als Piezo-Biegeaktor ausgebildet. Es handelt sich dabei um einen balkenartigen Biegewandler, dessen vorderer Endbereich 14 beim Anlegen einer Spannung quer zu seiner Längsachse seitwärts ausgelenkt wird.

Der Piezo-Biegeaktor 12 ist so ausgebildet, dass er ausgehend vom deaktivierten Grundzustand aktiv in zwei einander entgegengesetzte Richtungen ausgelenkt werden kann. Er verfügt zu diesem Zweck über zwei piezoelektrisch aktive Schichten 14a, 14b, zwischen denen eine piezoelektrisch inaktive, gleichwohl jedoch elektrisch leitfähige Zwischenschicht 15 angeordnet ist. Mittels einer elektrischen Schaltung 16 kann an die beiden piezoelektrisch aktiven Schichten 14a, 14b selektiv eine Steuerspannung angelegt werden, die eine Verformung der betreffenden Schicht zur Folge hat, woraus das Ausbiegen des Biegeaktors 12 in der einen oder anderen Richtung resultiert. Der Piezo-Biegeaktor 12 hat vorzugsweise einen Trimorph-Aufbau.

Bei einer nicht näher dargestellten Variante besteht der Biegeaktor aus sogenanntem Memory-Metall, das bei Umgebungstemperatur einen Grundzustand einnimmt, aus der es ausgelenkt wird, wenn es durch einen elektrischen Strom aufgeheizt wird, und in den es zurückkehrt, wenn es nach Unterbrechung des Stromflusses erkaltet. Auch ein Bimetall-Biegeaktor wäre denkbar. Die Aufzählung ist nicht abschließend zu verstehen.

Das Mehrwegeventil 1 des Ausführungsbeispiels ist als 3/3-Wegeventil ausgebildet, bevorzugt als Proportionalventil. Am Ventilgehäuse 2 sind außen drei Fluidanschlüsse 17 vorgesehen, die zu drei Ventilkanälen 18 gehören, die mit ihrem entgegengesetzten Ende in die Ventilkammer 6 einmünden. Bei der bevorzugten Bauform des Ausführungsbeispiels ist ein Fluidanschluss 17 ein Speiseanschluss 17a, ein weiterer Fluidanschluss 17 stellt einen Verbraucheranschluss 17b dar, und beim dritten Fluidanschluss 17 handelt es sich um einen Entlastungsanschluss 17c. Bei einer bevorzugten Ausgestaltung als Pneumatikventil stellt der Entlastungsanschluss 17c einen Entlüftungsanschluss dar.

Entsprechend den vorgenannten Anschlüssen repräsentieren die zugehörigen Ventilkanäle 18 einen Speisekanal 18a, einen Arbeitskanal 18b und einen Entlastungskanal 18c.

Der Arbeitskanal 18b mündet derart in die Ventilkammer 6 ein, dass seine Kanalmündung ständig offen ist und somit ständig mit der Ventilkammer 6 kommuniziert. Beim Ausführungsbeispiel liegt diese Kanalmündung der Stirnseite des vorderen Endbereiches 13 des Biegeaktors 12 mit Abstand gegenüber.

Die Kanalmündungen der beiden anderen Ventilkanäle 18 - diejenige des Speisekanals 18a sei als erste Kanalmündung 22, diejenige des Entlastungskanals 18c als zweite Kanalmündung 23 bezeichnet - sind in der Auslenkungsebene des Biegeaktors 12 auf Höhe des vorderen Endbereiches 13 auf entgegengesetzten Längsseiten des Biegeaktors 12 platziert. Diese ersten und zweiten Kanalmündungen 22, 23 sind jeweils von einem ersten bzw. zweiten Ventilsitz 24, 25 umgrenzt. Jeder Ventilsitz 24, 25 ist an einem relativ zum Ventilgehäuse 2 beweglichen ersten bzw. zweiten Ventilsitzkörper vorgesehen und leicht erhaben ausgebildet.

Die beiden Ventilsitzkörper 26, 27 erstrecken sich beim Ausführungsbeispiel auf entgegengesetzten Längsseiten des Biegeaktors 12 entlang diesem. Wenn der Biegeaktor 12 sich in seinem Grundzustand befindet, nimmt er die aus Figur 1 ersichtliche Mittelstellung ein, wobei sich die beiden Ventilsitzkörper 26, 27 etwa parallel zu dem Biegeaktor erstrecken. Jeder Ventilsitzkörper 26, 27 ist in der Nähe der Einspannstelle 7 unter Bildung von Schwenkgelenksbereichen 28 einstückig mit dem Ventilgehäuse 2 verbunden, derart, dass jeder Ventilsitzkörper 26, 27 in einer mit der Auslenkebene des Biegeaktors 12 zusammenfallenden Schwenkebene relativ zum Ventilgehäuse 2 verschwenkbar ist. Der Schwenkgelenksbereich 28 ist bevorzugt von einem Festkörpergelenk 28a gebildet, das eine federelastische Aufhängung des Ventilsitzkörpers 26, 27 bewirkt.

Anstelle eines Festkörpergelenkes könnte, bei gesonderter Ausgestaltung der Ventilsitzkörper 26, 27 und des Ventilgehäuses 2, auch eine sonstige gelenkige Lagerung vorgesehen sein.

Die beiden Ventilsitze 24, 25 befinden sich am freien Endabschnitt des jeweiligen Ventilsitzkörpers 26, 27, wobei sie seitwärts orientiert und dem Biegeaktor 12 zugewandt sind. Der zugehörige Speisekanal 18a bzw. Entlastungskanal 18c erstreckt sich durch den zugeordneten ersten bzw. zweiten Ventilsitzkörper 26, 27 hindurch, wobei er am vorderen Endbereich abgewinkelt ist und am rückwärtigen Endbereich den Schwenkgelenksbereich 28 zum zugeordneten Fluidanschluss 17 hin durchsetzt.

Dem ersten und zweiten Ventilsitzkörper 26, 27 sind erste bzw. zweite Federmittel 32, 33 zugeordnet, die den betreffenden Ventilsitzkörper 26, 27 mit einer Vorspannkraft F_{V} federnd in Richtung zum Biegeaktor 12 vorspannen. Befindet sich der Biegeaktor 12 im deaktivierten Grundzustand, nimmt er die aus Figur 1 hervorgehende Mittelstellung ein, wobei die beiden Ventilsitze 24, 25 durch die Federvorspannung der zugehörigen Ventilsitzkörper 26, 27 an der zugewandten Außenfläche des Biegeaktors 12 anliegen. Die zugehörigen Kanalmündungen 22, 23 sind dadurch vom Biegeaktor 12 verschlossen. Die dabei eingenommene Stellung der beiden Ventilsitzkörper 26, 27 sei als Schließstellung bezeichnet.

In der Mittelstellung sind somit die drei Ventilkanäle 18 fluidisch voneinander abgesperrt.

Bei einer typischen Betriebsweise des Mehrwegeventils 1 steht der Speiseanschluss 17a mit einer Druckquelle und der Entlastungsanschluss 17c mit einer Drucksenke, beispielsweise mit der Atmosphäre oder einem Tank, in Verbindung. Der Arbeitsanschluss 17b ist an einen zu betätigenden Verbraucher angeschlossen, beispielsweise an einen durch Fluidkraft betätigbaren Antrieb.

Nimmt der Biegeaktor 12 die in Figur 1 gezeigte Mittelstellung ein, kann das dem Verbraucher über den Arbeitskanal 18b zugeführte Fluidvolumen eingesperrt werden. Ein solcher Betriebszustand ist vor allem bei einem Einsatz des Mehrwegeventils 1 als Proportionalventil vorteilhaft, bei dem die Möglichkeit bestehen soll, den angeschlossenen Verbraucher mit einem konstanten Druck zu beaufschlagen.

Soll dem angeschlossenen Verbraucher über das Mehrwegeventil 1 ein Druckmedium zugeführt werden, wird der Biegeaktor 12 in der aus Figur 2 hervorgehenden Weise elektrisch aktiviert. Er krümmt sich dabei zur Seite der zum Entlastungskanal 18c gehörenden zweiten Kanalmündung 23 und hebt vom ersten Ventilsitz 24 ab, der zur ersten Kanalmündung 22 des Speisekanals 18a gehört. Auf diese Weise ist die Verbindung zwischen dem Speisekanal 18a und der Ventilkammer 6 freigegeben, und das Druckmedium kann den durch Pfeil 34 angedeuteten Strömungsweg vom Speiseanschluss 17a über die Ventilkammer 6 zum Arbeitsanschluss 17b nehmen.

Beim Auslenken in die in Figur 2 gezeigte erste ausgelenkte Stellung drückt der Biegeaktor 12 auf den ihm in der Auslenkrichtung vorgelagerten zweiten Ventilsitz 25 und verdrängt dadurch den zugeordneten zweiten Ventilsitzkörper 27. Bei diesem Verdrängen wird der zweite Ventilsitzkörper 27 um den Schwenkgelenksbereich 28 verschwenkt. Die Schwenkrichtung fällt also mit derjenigen des Biegeaktors 12 zusammen.

Das Verdrängen des zweiten Ventilsitzkörpers 27 erfolgt unter Überwindung der von den zweiten Federmitteln 33 aufgebrachten Federkraft. Kehrt der Biegeaktor 12 durch entsprechende Ansteuerung in die Mittelstellung zurück, folgt der zweite Ventilsitzkörper 27 aufgrund der Federbeaufschlagung nach. Stets behält der zweite Ventilsitzkörper 27 dabei die Schließstellung bei, da er mit seinem zweiten Ventilsitz 25 gegen den Biegeaktor 12 vorgespannt ist und diesem somit nachgeführt wird.

Vergleichbare Gegebenheiten liegen vor, wenn der Biegeaktor 12 gemäß Figur 3 so angesteuert wird, dass er aus der Mittelstellung in die entgegengesetzte Richtung ausgelenkt wird, bis er die aus Figur 2 ersichtliche zweite ausgelenkte Stellung einnimmt. Hier bleibt der Biegeaktor 12 in ständigem Kontakt mit dem ersten Ventilsitz 24, sodass der Speisekanal 18a von der Ventilkammer 6 abgetrennt bleibt und der erste Ventilsitzkörper 26 die Schließstellung beibehält. Gleichzeitig ist der Biegeaktor 12 vom zweiten Ventilsitz 25 abgehoben, sodass die zweite Kanalmündung 23 freigegeben ist und somit der Entlastungskanal 18c mit der Ventilkammer 6 kommuniziert. Somit steht der Arbeitsanschluss 17b über die Ventilkammer 6 mit dem Entlastungsanschluss 17c in fluidischer Verbindung, was es dem Druckmedium ermöglicht, gemäß Pfeil 35 durch das Mehrwegeventil 1 hindurch vom angeschlossenen Verbraucher zurückzuströmen.

Die ersten und zweiten Federmittel 32, 33 sind beim Ausführungsbeispiel zumindest teilweise gesondert vom Ventilgehäuse 2 und den Ventilsitzkörpern 26, 27 ausgebildet. Sie greifen jeweils einerseits am Ventilgehäuse 2 und andererseits am zu beaufschlagenden ersten bzw. zweiten Ventilsitzkörper 26, 27 an. Die Angriffsstellen am ersten bzw. zweiten Ventilsitzkörper 26, 27 befinden sich zweckmäßigerweise an dessen vorderem Endbereich, insbesondere zumindest in etwa auf gleicher Höhe mit den beiden Kanalmündungen 22, 23. Die Federmittel 32, 33 stellen insbesondere Druckfedermittel dar.

Aufgrund der federelastischen Aufhängung der Ventilsitzkörper 26, 27 werden durch die entsprechenden Festkörpergelenke 28a weitere Federmittel 33a gebildet, die bei einer Auslenkung des Ventilsitzkörpers 26, 27 ein rückstellendes Moment hervorrufen. Bei entsprechender Auslegung können diese weiteren Federmittel 33a ausreichend sein, um die gewünschte Federvorspannung hervorzurufen, sodass auf die erstgenannten Federmittel 32, 33 verzichtet werden kann. Die weiteren Federmittel 33a können entfallen, wenn der Ventilsitzkörper 26, 27 auf andere Weise verstellbar gelagert ist.

Es ist auf jeden Fall von Vorteil, wenn die ersten und zweiten Federmittel 32, 33 innerhalb der Ventilkammer 2 platziert sind.

Durch die ersten und zweiten Federmittel 32, 33 - und eventuell auch die weiteren Federmittel 33a - wird erreicht, dass die beiden Ventilsitze 24, 25 in der Mittelstellung des Biegeaktors 12 mit einem gewissen Anpressdruck am Biegeaktor 12 anliegen. Andererseits soll jedoch derjenige Ventilsitzkörper 26, 27, dessen Kanalmündung 22, 23 freigegeben werden soll, dem sich wegbewegenden Biegeaktor 12 nicht folgen. Das Mehrwegeventil 1 ist daher mit ersten und zweiten Anschlagmitteln 36, 37 ausgestattet, die so mit den Ventilsitzkörpern 26, 27 zusammenarbeiten können, dass sie diese an einem Nachfolgen des Biegeaktors 12 hindern, wenn der Biegeaktor 12 in Richtung zum jeweils anderen Ventilsitzkörper ausgelenkt wird.

Beim Ausführungsbeispiel bestehen die ersten und zweiten Anschlagmittel 36, 37 aus jeweils einem ventilgehäusefesten Anschlagarm 38, der in die Ventilkammer 6 hineinragt und auf der dem Biegeaktor 12 zugewandten Seite vor eine am betreffenden Ventilsitzkörper 26, 27 vorgesehene Anschlagfläche 42 ragt. Die Anschlagflächen 42 sind beim Ausführungsbeispiel an Vorsprüngen des betreffenden Ventilsitzkörpers 26, 27 ausgebildet, insbesondere in der Nachbarschaft des zugeordneten Ventilsitzes 24, 25.

Die ersten und zweiten Anschlagmittel 36, 37 sind in der Richtung der Verstellbewegung der Ventilsitzkörper 26, 27 justierbar, was durch die Doppelpfeile 43 angedeutet werden soll. Dadurch lässt sich der in der Mittelstellung des Biegeaktors 12 vorhandene Grad der Vorspannung, mit dem die Ventilsitze 24, 25 an den Biegeaktor 12 angedrückt werden, nach Bedarf einstellen. Die Herstellung des Mehrwegeventils 1 wird dadurch erheblich vereinfacht.

Beim Ausführungsbeispiel sind die beiden Anschlagarme 28 durch Vorspann-Federmittel 44 jeweils in Richtung zur zugeordneten Anschlagfläche 42 gegen ein gehäusefest verankertes Justierelement 45 vorgespannt.

Die Justierelemente 45 sind beim Ausführungsbeispiel von Justierschrauben gebildet, die in das Ventilgehäuse 2 eingeschraubt sind und in die Ventilkammer 6, zu den Anschlagarmen 8 hin, hineinragen.

Beim Ausführungsbeispiel erstrecken sich die Anschlagarme 38 von der dem vorderen Endbereich 13 des Biegeaktors 12 axial gegenüberliegenden Seite des Ventilgehäuses 2 her in die Ventilkammer 6 hinein. Sie erstrecken sich dabei vorzugsweise etwa parallel zur Längsachse des unverformten Biegeaktors 12. Die Vorspann-Federmittel 44 sitzen zwischen den beiden Anschlagarmen 38, sodass sie diese gleichzeitig, zu entgegengesetzten Seiten hin, beaufschlagen. Die Justierelemente 45 ragen ausgehend von den Böden 4 von der Seite her in die Ventilkammer 6 hinein.

Das beispielhaft beschriebene Mehrwegeventil 1 zeichnet sich durch eine besonders einfache Herstellung und Montage aus sowie durch sehr kompakte Abmessungen. Auch ist die realisierte Ausgestaltung und Lagerung der Ventilsitzkörper 26, 27 besonders empfehlenswert. Allerdings wären auch abweichende Ausgestaltungen und Lagerungen der Ventilsitzkörper 26, 27 im Rahmen der Erfindung möglich. Beispielsweise könnten die Ventilsitzkörper 26, 27 in der Auslenkebene des Biegeaktors 12 verschiebbar am Ventilgehäuse 2 gelagert sein.

Das Mehrwegeventil 1 lässt sich durch entsprechende Ansteuerung des Biegeaktors 12 sowohl als Dreistellungs-Schaltventil als auch als Proportionalventil betreiben. Letzteres hat den Vorteil, dass der Biegeaktor 12 zusätzlich zur Mittelstellung und den beiden anhand Figuren 2 und 3 illustrierten ausgelenkten Stellungen auch noch stufenlos in Zwischenstellungen positionierbar ist, um den Strömungsquerschnitt durch die freigegebene Kanalmündung 22, 23 variabel vorzugeben.

## Patentansprüche

1. Mehrwegeventil, mit einer Ventilkammer (6), in die wenigstens drei Ventilkanäle (18) einmünden, wobei zwei der Kanalmündungen (22, 23) auf entgegengesetzten Längsseiten eines länglichen, elektrisch aktivierbaren Biegeaktors (12) vorgesehen und jeweils von einem Ventilsitz (24, 25) umrahmt sind, **dadurch gekennzeichnet, dass** die beiden Ventilsitze (24, 25) jeweils an einem federnd in Richtung zum Biegeaktor (12) vorgespannten beweglichen Ventilsitzkörper (26, 27) vorgesehen sind und in einer Mittelstellung des Biegeaktors (12) unter Einnahme einer Schließstellung gleichzeitig am Biegeaktor (12) anliegen, sodass die Kanalmündungen (22, 23) verschlossen sind, wobei der Biegeaktor (12) bei einer ausgehend von der Mittelstellung erfolgenden Auslenkung in die eine oder andere Richtung den in der jeweiligen Auslenkrichtung vorgelagerten Ventilsitzkörper (26, 27) unter Beibehaltung dessen Schließstellung entgegen der Federkraft verdrängen kann und gleichzeitig vom Ventilsitz (25, 24) des anderen, durch Anschlagmittel (36, 37) an einem Nachfolgen gehinderten Ventilsitzkörper (27, 26) abheben und dessen Kanalmündung (23, 22) freigeben kann.

2. Mehrwegeventil nach Anspruch 1, **dadurch gekennzeichnet, dass** sich die Ventilsitzkörper (26, 27) längs des Biegeaktors (12) erstrecken und in der Auslenkebene des Biegeaktors (12) verschwenkbar sind.

3. Mehrwegeventil nach Anspruch 2, **dadurch gekennzeichnet, dass** die Ventilsitzkörper (26, 27) in der Mittelstellung des Biegeaktors (12) etwa parallel zu dem Biegeaktor (12) verlaufen.

4. Mehrwegeventil nach Anspruch 2 oder 3, **dadurch gekennzeichnet, dass** der Biegeaktor (12) einenends gehäusefest eingespannt ist, wobei sich die Schwenkgelenksbereiche (28) der Ventilsitzkörper (26, 27) in der Nähe der Einspannstelle (7) des Biegeaktors (12) befinden.

5. Mehrwegeventil nach einem der Ansprüche 1 bis 4, **dadurch gekennzeichnet, dass** die Ventilsitzkörper (26, 27) über ein Festkörpergelenk (28a) einstückig mit dem die Ventilkammer (6) definierenden Ventilgehäuse (2) verbunden sind.

6. Mehrwegeventil nach einem der Ansprüche 1 bis 5, **dadurch gekennzeichnet, dass** der Biegeaktor (12) ein Piezo-Biegeaktor ist.

7. Mehrwegeventil nach einen der Ansprüche 1 bis 6, **dadurch gekennzeichnet, dass** die Ventilsitzkörper (26, 27) am Ventilgehäuse (2) federelastisch aufgehängt sind.

8. Mehrwegeventil nach einem der Ansprüche 1 bis 7, **dadurch gekennzeichnet, dass** zur Erzeugung der Federvorspannung einerseits am Ventilgehäuse (2) und andererseits am betreffenden Ventilsitzkörper (26, 27) angreifende Federmittel (33, 33a) vorgesehen sind.

9. Mehrwegeventil nach Anspruch 8, **dadurch gekennzeichnet, dass** die Federmittel (33) in der Ventilkammer (6) platziert sind.

10. Mehrwegeventil nach einem der Ansprüche 1 bis 9, **dadurch gekennzeichnet, dass** die zur Begrenzung des Verstellwegs der Ventilsitzkörper (26, 27) vorgesehenen Anschlagmittel (36, 37) in der Richtung der Verstellbewegung der Ventilsitzkörper (26, 27) justierbar sind.

11. Mehrwegeventil nach Anspruch 10, **dadurch gekennzeichnet, dass** die Anschlagmittel (36, 37) von in die Ventilkammer (6) hineinragenden Anschlagarmen (38) gebildet sind.

12. Mehrwegeventil nach einem der Ansprüche 1 bis 11, **dadurch gekennzeichnet, dass** die Anschlagmittel (36, 37) in der Nachbarschaft des Ventilsitzes (24, 25) mit dem zugeordneten Ventilsitzkörper (26, 27) kooperieren.

13. Mehrwegeventil nach einem der Ansprüche 1 bis 12, **gekennzeichnet durch** eine Ausgestaltung als Dreistellungsventil.

14. Mehrwegeventil nach einem der Ansprüche 1 bis 13, **gekennzeichnet durch** eine Ausgestaltung als 3/3-Wegeventil.

15. Mehrwegeventil nach einem der Ansprüche 1 bis 14, **gekennzeichnet durch** eine Ausgestaltung als Proportionalventil.

## Claims

1. Multiway valve, with a valve chamber (6), into which lead at least three valve passages (18), wherein two of the passage orifices (22, 23) are provided on opposite side walls of an elongated, electrically actuable bending actuator (12) and are each framed by a valve seat (24, 25), **characterised in that** the two valve seats (24, 25) are each provided on a valve seat body (26, 27) which is spring-biased to move towards the bending actuator (12) and, in a central position of the bending actuator (12), simultaneously fit up against the bending actuator (12) to assume a closed position so that the passage orifices (22, 23) are closed, wherein the bending actuator (12), if deflected from the central position in one or the other direction, can displace the valve seat body (26, 27) in front of it in the relevant deflected position, while maintaining its closed position against the spring force, and can simultaneously lift from the valve seat (25, 24) the other valve seat body (27, 26), which is prevented from following by stop means (36, 37), and can open its passage orifice (23, 22).

2. Multiway valve according to claim 1, **characterised in that** the valve seat bodies (26, 27) extend along the bending actuator (12) and may be swivelled in the deflection plane of the bending actuator (12).

3. Multiway valve according to claim 2, **characterised in that** the valve seat bodies (26, 27) run roughly parallel to the bending actuator (12) in the central position of the bending actuator (12).

4. Multiway valve according to claim 2 or 3, **characterised in that** the bending actuator (12) is clamped at one end securely to the casing, while the swivel joint areas (28) of the valve seat bodies (26, 27) are located in the vicinity of the clamping point (7) of the bending actuator (12).

5. Multiway valve according to any of claims 1 to 4, **characterised in that** the valve seat bodies (26, 27) are joined integrally with the valve casing (2) defining the valve chamber (6) by a solid-state link (28a).

6. Multiway valve according to any of claims 1 to 5, **characterised in that** the bending actuator (12) is a piezo-bending actuator.

7. Multiway valve according to any of claims 1 to 6, **characterised in that** the valve seat bodies (26, 27) are suspended spring-elastically from the valve casing (2).

8. Multiway valve according to any of claims 1 to 7, **characterised in that** acting spring means (33, 33a) are provided to generate the spring bias on the valve casing (2) on the one hand and on the relevant valve seat body (26, 27) on the other hand.

9. Multiway valve according to claim 8, **characterised in that** the spring means (33) are located in the valve chamber (6).

10. Multiway valve according to any of claims 1 to 9, **characterised in that** the stop means (36, 37) provided to limit the adjustment path of the valve seat bodies (26, 27) are adjustable in the direction of the adjustment movement of the valve seat bodies (26, 27).

11. Multiway valve according to claim 10, **characterised in that** the stop means (36, 37) are formed by stop arms (38) extending into the valve chamber (6).

12. Multiway valve according to any of claims 1 to 11, **characterised in that** the stop means (36, 37) cooperate with the assigned valve seat body (26, 27) in the vicinity of the valve seat (24, 25).

13. Multiway valve according to any of claims 1 to 12, **characterised by** design as a three-position valve.

14. Multiway valve according to any of claims 1 to 13, **characterised by** design as a 3/3-way valve.

15. Multiway valve according to any of claims 1 to 13, **characterised by** design as a proportional valve.

## Revendications

1. Vanne à plusieurs voies avec une chambre de vanne (6) dans laquelle débouchent au moins trois canaux de vanne (18), deux des embouchures de canal (22, 23) étant prévues sur des côtés longitudinaux opposés d'un actionneur de flexion (12) allongé, activable électriquement, et étant entourées chacune par un siège de vanne (24, 25), **caractérisée en ce que** les deux sièges de vanne (24, 25) sont prévus chacun sur un corps de siège de vanne (26, 27) mobile, précontraint élastiquement en direction de l'actionneur de flexion (12), et s'appliquent, dans une position médiane de l'actionneur de flexion (12), simultanément contre l'actionneur de flexion (12) en prenant une position de fermeture, ce qui fait que les embouchures de canal (22, 23) sont fermées, l'actionneur de flexion (12) pouvant déplacer, à l'encontre de la force d'un ressort, lors d'une déviation s'effectuant à partir de la position médiane dans un sens ou dans l'autre, le corps de siège de vanne (26, 27) placé devant dans la direction de déviation respective, en conservant sa position de fermeture, et pouvant soulever en même temps du siège de vanne (25, 24) l'autre corps de siège de vanne (27, 26), que des moyens de butée (36, 37) empêchent de suivre, et pouvant dégager son embouchure de canal (23, 22).

2. Vanne à plusieurs voies selon la revendication 1, **caractérisée en ce que** les corps de siège de vanne (26, 27) s'étendent le long de l'actionneur de flexion (12) et peuvent pivoter dans le plan de déviation de l'actionneur de flexion (12).

3. Vanne à plusieurs voies selon la revendication 2, **caractérisée en ce que** les corps de siège de vanne (26, 27) s'étendent dans la position médiane de l'actionneur de flexion (12), approximativement parallèlement à l'actionneur de flexion (12).

4. Vanne à plusieurs voies selon la revendication 2 ou 3, **caractérisée en ce que** l'actionneur de flexion (12) est serré à une extrémité solidairement avec le boîtier, les zones d'articulation de pivotement (28) des corps de siège de vanne (26, 27) se trouvant à proximité du point de serrage (7) de l'actionneur de flexion (12).

5. Vanne à plusieurs voies selon l'une des revendications 1 à 4, **caractérisée en ce que** les corps de siège de vanne (26, 27) sont reliés d'une seule pièce, par une articulation solide (28a) au boîtier de vanne (2) définissant la chambre de vanne (6).

6. Vanne à plusieurs voies selon l'une des revendications 1 à 5, **caractérisée en ce que** l'actionneur de flexion (12) est un piézo-actionneur de flexion.

7. Vanne à plusieurs voies selon l'une des revendications 1 à 6, **caractérisée en ce que** les corps de siège de vanne (26, 27) sont suspendus de manière élastique au boîtier de vanne (2).

8. Vanne à plusieurs voies selon l'une des revendications 1 à 7, **caractérisée en ce que** pour produire la précontrainte de ressort il est prévu des moyens à ressort (33, 33a) agissant d'une part sur le boîtier de vanne (2) et d'autre part sur le corps de siège de vanne (26, 27) concerné.

9. Vanne à plusieurs voies selon la revendication 8, **caractérisée en ce que** les moyens à ressort (33) sont placés dans la chambre de vanne (6).

10. Vanne à plusieurs voies selon l'une des revendications 1 à 9, **caractérisée en ce que** les moyens de butée (36, 37), prévus pour limiter la course de déplacement des corps de siège de vanne (26, 27), peuvent être ajustés dans la direction du mouvement de réglage des corps de siège de vanne (26, 27).

11. Vanne à plusieurs voies selon la revendication 10, **caractérisée en ce que** les moyens de butée (36, 37) sont formés par des bras de butée (38) pénétrant à l'intérieur de la chambre de vanne (6).

12. Vanne à plusieurs voies selon l'une des revendications 1 à 11, **caractérisée en ce que** les moyens de butée (36, 37) coopèrent, à proximité du siège de vanne (24, 25), avec le corps de siège de vanne (26, 27) associé.

13. Vanne à plusieurs voies selon l'une des revendications 1 à 12, **caractérisée par** une réalisation en tant que vanne à trois positions.

14. Vanne à plusieurs voies selon l'une des revendications 1 à 13, **caractérisée par** une forme de réalisation en tant que vanne à 3/3 voies.

15. Vanne à plusieurs voies selon l'une des revendications 1 à 14, **caractérisé par** une forme de réalisation en tant que vanne proportionnelle.
